# EUROPEAN PATENT SPECIFICATION

(11) **EP 4 085 175 B1**
(45) Date of publication and mention of the grant of the patent: **28.10.2026**
(21) Application number: 20909038.0
(22) Date of filing: 21.12.2020
(51) Int. Cl.: E04F 15/16, E04F 15/18, E04B 1/92, B24B 7/18

(54) **FLOOR FINISH REMOVAL PAD ASSEMBLY AND METHOD OF REMOVING FLOOR FINISH**
BODENBELAGENTFERNUNGSKISSENANORDNUNG UND VERFAHREN ZUM ENTFERNEN VON BODENBELÄGEN
ENSEMBLE TAMPON DE RETRAIT DE FINITION DE SOL ET PROCÉDÉ DE RETRAIT DE FINITION DE SOL

(30) Priority: 30.12.2019 US 201962954964 P
(43) Date of publication of application: 09.11.2022
(73) Proprietor: 3M Innovative Properties Company, Saint Paul, Minnesota 55133-3427 (US)
(72) Inventor: ZU, Lijun, Saint Paul, Minnesota 55133-3427 (US); ECKEL, Joseph B., Saint Paul, Minnesota 55133-3427 (US); NIENABER, Aaron K., Saint Paul, Minnesota 55133-3427 (US); MANALO, Jamie M., Woodbury, Minnesota 55125 (US); LIU, Yuyang, Saint Paul, Minnesota 55133-3427 (US); NELSON, Thomas J., Saint Paul, Minnesota 55133-3427 (US)
(74) Representative: Vossius & Partner Patentanwälte Rechtsanwälte mbB
(86) International application number: PCT/IB2020/062302
(87) International publication number: WO 2021/137092

(56) References cited:
- WO-A1-2019/012419
- KR-A- 20140 122 617
- KR-B1- 101 482 785
- US-A1- 2005 081 455
- US-A1- 2005 254 896
- US-A1- 2006 188 334
- US-A1- 2007 292 207
- US-A1- 2016 221 155

## Description

### Background

Protective floor finish scratches, scuffs, and wears as it is exposed to the environment and foot and commercial building traffic (e.g., carts). In order to reapply floor finish, the floor finish must be removed to expose the bare substrate underneath. Caustic chemicals are conventionally required to soften the hard finish so that it can be removed through abrasion.

KR 101 482 785 B1 relates to a grinding wheel for polishing a hard surface such as a concrete floor or a stone.

US 2005/0081455 A1 discloses a flexible abrasive product comprising a flexible backing bearing a primer coating and a plurality of separated shaped structures, each structure having a distal end spaced from said backing and an attachment end attached to the primer coating on the backing, said shaped structures being comprised of abrasive particles and cured particulate binder.

WO 2019/012419 A1 discloses a grained abrasive disc consisting of a resin in which tungsten carbide grains are embedded.

### Summary

In one aspect, the present description relates to a floor finish removal pad assembly. In particular, the floor finish removal pad assembly includes a compressible backing pad having a first major surface and a second major surface, and a plurality of discontinuously arranged, non-rigid coated abrasive articles attached to the first major surface of the compressible backing pad.

In another aspect, the present description relates to a method of removing floor finish. In particular, the method of removing floor finish includes contacting a plurality of discontinuously arranged, non-rigid coated abrasive articles attached to a major surface of a compressible backing pad with a coated hard floor surface and optionally repeating the step of contacting. The step of contacting is done in the absence of an effective amount of chemical strippers.

In yet another aspect, the present description relates to a floor finish removal pad assembly. In particular the floor finish removal pad assembly includes a compressible backing pad having a first major surface and a second major surface, and a discontinuously patterned, non-rigid coated abrasive article substantially coextensive with the compressive backing pad and attached to the first major surface of the compressible backing pad.

### Brief Description of the Drawings

FIG. 1 is a bottom plan view of an exemplary floor finish removal pad assembly including several exemplary shapes of coated abrasive articles.
FIG. 2 is a schematic perspective view of exemplary abrasive grain shapes.
FIG. 3 is a schematic elevation view of an exemplary system to remove floor finish using a floor finish removal pad assembly.
FIG. 4 is a schematic plan view of an exemplary abrasive pattern.

### Detailed Description

Floor stripping, in the area of floor care, refers to completely removing old wax, finish, soil, and debris found on the floor. It is known that floor stripping is one of the most time-consuming and labor-intensive tasks in the maintenance and care of floors, or even throughout all of the professional cleaning industry. In general, applying a wax or a floor finish to a floor surface substrate helps keep the floor looking attractive, glossy, and free from scratches and stains. Typically, these finishes or waxes are applied in multiple layers or coats. However, over time, and especially with heavy foot or other traffic, these layers wear down, become embedded with dirt or debris, and cannot be cleaned or restored through regular conventional maintenance. In these cases the floor finish or wax must be completely removed in order for a new finish coating to be applied.

A conventional floor stripping process includes four discrete steps. First, floor finish stripping chemicals are applied on the floor surface and left to dwell for approximately ten minutes. Next, a floor stripping pad is used to abrade the loosened and/or softened floor finish. Third, the stripping solution, now contaminated with dirt and floor finish particulates, must be removed from the floor. Finally, the bare floor must be cleaned and dried before reapplying any floor finish.

Because of the messy, smelly, and potentially dangerous conventional process, there has been a desire to use chemical-free floor stripping methods. However, current methods take multiple passes to remove even a single layer of floor coating. Considering that most floor coatings recommend multiple (e.g., two or four) coats, presently available chemical-free stripping solutions are not practical in light of the additional labor cost required.

Floor finish removal pad assemblies described herein are surprisingly effective at removing layers of floor finish without using chemical floor strippers. In some embodiments, floor finish removal pad assemblies take advantage of specifically shaped and aligned abrasive grains. In some embodiments, floor finish removal pad assemblies take advantage of being non-rigid coated abrasive articles placed discontinuously on a compressible backing pad. All floor surfaces have some degree of unevenness, and such compressibility and non-rigidity may help these assemblies reach the low points of an uneven floor and remove floor finish coating thereon.

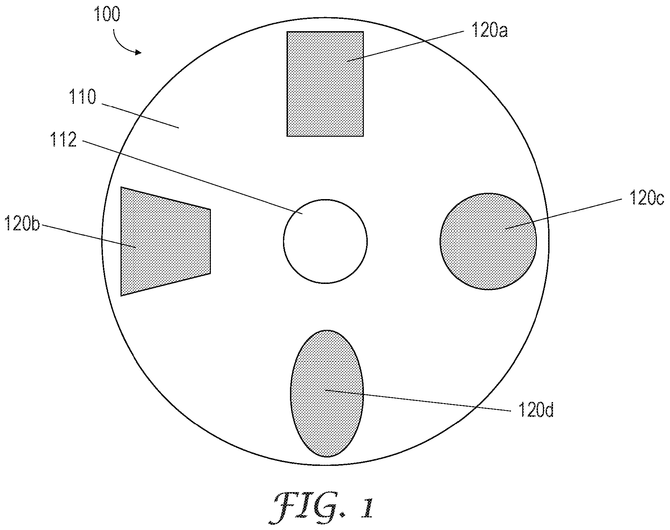

FIG. 1 is a bottom plan view of an exemplary floor finish removal pad assembly including several exemplary shapes of coated abrasive articles. Floor finish removal pad assembly **100** includes compressible backing pad **110,** optional mounting hole **112,** and exemplary discontinuously arranged coated abrasive articles **120a, 120b, 120c,** and **120d.**

Floor finish removal pad **100** may be any overall shape and size. In some embodiments, floor finish removal pad **100** may be round or disc-like if intended to be mountable on a rotating machine. In some embodiments, floor finish removal pad **100** may be rectangular or square if intended to be mountable on a square sander or an orbital sander.

Compressible backing pad **110** likewise may be any suitable shape, size, and thickness. In some embodiments, compressible backing pad may be any suitable thickness between, for example 0.25 and 10 cm. A thickness of one inch is common (2.54 cm). In some embodiments, the compressible backing pad may have a standard size and shape for mounting on existing floor cleaning and treatment equipment. For example, 20 inch (50.8 cm) floor pads are common, but sizes from 10 inches (25.4 cm) to 24 inches (60.96 cm) in diameter may be suitable for these applications.

Compressible backing pad **110** may be formed from any suitable material or materials. In some embodiments, compressible backing pad **110** is a urethane foam rubber or a natural latex foam rubber. In some embodiments, compressible backing pad **110** is an open-celled ethylene-vinyl acetate. Any compressible natural or polymeric material or blends thereof may be used. In some embodiments, compressible backing pad is a lofty non-woven pad. In these embodiments, the material used for the particular nonwoven fibers need not be itself compressible, but the lofty pad may be configured to be compressible as the fibers may flex under stress. The fibers may include natural and synthetic fibers. In some embodiments, the fibers may be or include natural fiber (e.g., vegetable fibers such as hemp, jute, and the like; animal hair fibers, such as hog's hair), a polyamide (e.g., a nylon), a polyester (e.g., polyethylene terephthalate or polyethylene isophthalate), rayon, polyethylene, polypropylene, a synthetic fiber, or a combination thereof. Synthetic fibers include polymers derived from natural sources, such as polylactic acid derived from corn. The fibers may be adhered to each other at their joints of mutual contact by a binder and/or by being melt-bonded.

Compressible backing pad **110** includes optional mounting hole **112.** Optional mounting hole may be any suitable size or shape, and can be adapted or designed to cause floor finish removal pad assembly **100** to be usable or attachable to any desired floor treatment or maintenance machine.

Discontinuously arranged coated abrasive articles **120a, 120b, 120c,** and **120d** may be any suitable shape and size, although in many embodiments it is desirable for such coated abrasive articles to fit completely within the area of compressible backing pad **110** when attached. As can be seen from the variety of shapes represented **120a, 120b, 120c,** and **120d,** there are many possible suitable configurations. In some embodiments, the coated abrasive articles are all the same shape; in some embodiments, the coated abrasive articles are different shapes. In some embodiments, the coated abrasive articles are the same size or area; in some embodiments, the coated abrasive articles are different sizes or areas. Suitable shapes include circles, ovals, ellipses, polygons, squares, rectangles, trapezoids, diamonds, rhombuses, and the like. Irregular, curved, and other shapes are also possible and may be suitable for certain applications. The coated abrasive articles are non-rigid, meaning they have at least some degree of freedom to recoverably bend without cracking or fracturing. In some embodiments, the coated abrasive articles may include a cloth or fabric backing, or a thin or flexible polymeric backing. In some embodiments, the coated abrasive articles may include a nonwoven or foam backing. In some embodiments, the coated abrasive articles may be removably attachable to the compressible backing pad, and may include adhesives or hook and loop (or other physical interlock) mechanisms for mounting.

The coated abrasive articles are covered with or at least include a plurality of abrasive grains. In some embodiments, the plurality of abrasive grains includes one type of abrasive material. In some embodiments, the plurality of abrasive grains includes a plurality or blend of abrasive materials. In some embodiments, the plurality of abrasive grains includes just one of substantially the same shape abrasive grain. In some embodiments, the plurality of abrasive grain includes multiple shapes of abrasive grains. The abrasive grains can be any of the abrasive particle materials described herein, such as aluminum oxide, ceramic aluminum oxide, heat-treated aluminum oxide, silicon carbide, co-fused alumina- zirconia, diamond, ceria, titanium diboride, cubic boron nitride, boron carbide, garnet, flint, emery, sol-gel derived abrasive particles, novaculite, pumice, rouge, sand, corundum, sandstone, tripoli, powdered feldspar, staurolite, ceramic iron oxide, glass powder, steel particles, and blends thereof. The abrasive coating can also include resins. Exemplary resins suitable for use include melamine resin, polyester resin such as the condensation product of maleic and phthalic anhydrides and propylene glycol, synthetic polymers such as styrene-butadiene (SBR) copolymers, carboxylated-SBR copolymers, phenol-aldehyde resins, polyesters, polyamides, polyureas, polyvinylidene chloride, polyvinyl chloride, acrylic acid- methylmethacrylate copolymers, acetal copolymers, polyurethanes, and mixtures and cross-linked versions thereof.

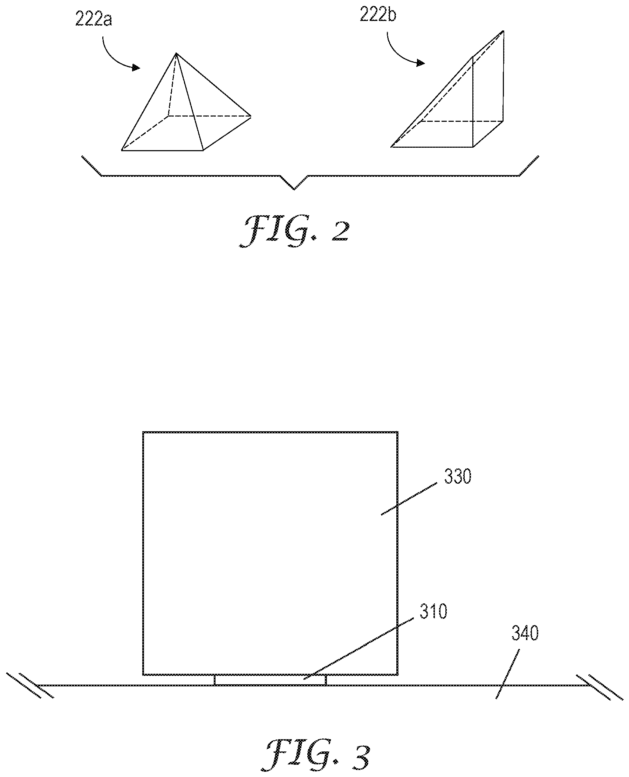

Shaped abrasive grains may be particularly useful in certain embodiments. Shaped abrasive grains may be molded abrasive grains that include shapes not found in essentially randomized conventionally sourced abrasives. Shaped abrasive grains may also be more uniform in shape. Methods of making shaped abrasive grains are known and are described, for example, in U.S. Patent No. 8,142,531 B2 (Adefris et al.). Suitable shaped abrasive grains may be any suitable shape (discussed in more detail in conjunction with FIG. 2) and any suitable size. In some embodiments, average or characteristic dimensions of the abrasive grains (whether shaped or not) may be between 0.01 and 0.1 mm, between 0.1 and 0.5 mm, between 0.5 and 1 mm, or between 1 mm and 5 mm. In some embodiments, the plurality of abrasive grains may include a blend of sizes. Abrasive grains or abrasive grains mixed with or in any other components to create an abrasive slurry may be coated onto the backing by any suitable method, including spray coating or roll coating. Lubricants or other additives may be incorporated or included.

In some embodiments, any of the abrasive grains described in conjunction with the discontinuous non-rigid coated abrasive articles may be present on any other part of the floor finish removal pad assembly, such as on the compressible backing pad.

In some embodiments, a single coated abrasive article including a backing is coextensive or substantially coextensive with the compressible backing pad. The backing of the single coated abrasive article may be patterned to create areas of abrasives adjacent to areas without abrasives. As for any of the discontinuous coated abrasive articles described above, any suitable abrasive or combination of abrasives may be used.

FIG. 2 is a schematic perspective view of exemplary abrasive grain shapes. Equilateral triangle abrasive grain shape **222a** has faces which approximate an equilateral triangle. Right triangle abrasive grain shape **222b** has faces which approximate a right triangle. Shapes such as those depicted in FIG. 2 may be particularly suitable for specific types of floor finish, or may be generally applicable to a variety of floor finish, and the shape may be selected based on the application and desired performance. In some embodiments, other shapes or modifications of the shapes represented herein may be used. For example, the sidewall length or angle may be modified.

FIG. 3 is a schematic elevation view of an exemplary system to remove floor finish using a floor finish removal pad assembly. Floor device **330** incorporates floor finish removal pad assembly **310** in order to remove a floor finish from coated floor **340.** Floor device **330** may be an autoscrubber. In some embodiments, floor device **330** may be an orbital sander or a square sander. Floor device **330** is configured to aid in contacting floor finish removal pad assembly **310** against coated floor **340.** In some embodiments, contacting floor finish removal pad assembly **310** against coated floor **340** includes rotating the floor finish removal pad assembly. Coated floor **340** may be any coated hard surface, including vinyl composition tile (VCT), solid vinyl tile, a stone floor, or any other suitable natural or manufactured floor surface. In FIG. 3, coated floor **340** is indicated with break lines to show it can be of arbitrarily large or small dimensions. Coated floor may also include any wax or floor coating or protector, with any number of coats (though typically less than ten). In some embodiments, contacting the floor finish removal pad assembly against the coated floor includes translating the floor finish removal pad assembly laterally in relation to the coated floor. In some embodiments, contacting the floor finish removal pad assembly against the coated floor is done in the absence of chemical strippers. In some embodiments, contacting the floor finish removal pad assembly against the coated floor is done in the absence of water. In some embodiments, the contacting step is optionally repeated. In some embodiments, removing a 25-micrometer thick coat of floor finish requires less than 10 steps of contacting.

### Examples

Floor finish removal pad assembly samples were made by coating abrasives on a film backing. The samples were tested for cut and finish removal. Unless otherwise noted, all parts, percentages, ratios, etc. in the Examples and the rest of the specification are by weight. Unless stated otherwise, all other reagents were obtained, or are available from chemical vendors such as Sigma-Aldrich Company, St. Louis, Missouri, or may be synthesized by known methods.

**Table 1. Abbreviations for materials and reagents used in the Examples.**

| | |
|---|---|
| PF1 | RESOLE resin (75 wt. % in water), a phenol: formaldehyde (molar ratio of 1: 1.5to 1:2.1) condensate catalyzed by 1 to 5% metal hydroxide. Obtained from Georgia Pacific, Atlanta, GA. |
| FIL1 | Calcium carbonate, 13 micrometer average particle size. Obtained under trade designation "Q325" form J.M. Huber Coporation, Altanta, Ga. |
| FIL2 | Calcium silicate obtained under the trade designation M400 WOLLASTOCOAT. Obtained from NYCO,Willsboro, NY. |
| FIL3 | Hydrophilic amorphous fumed silica obtained under the trade designation CAB-O-SIL M-5 from Cabot Corporation, Alpharetta, GA. |
| FIL4 | Cryolite obtained under the trade designation CRYOLITE RTN-C. Obtained from FREEBEE A'S, Ullerslev, Denmark. |
| LATEX | A nitrile latex available under trade designation "HYCAR 1581" from Noveon, Cleveland, OH. |
| RIO | Red iron oxide pigment obtained under the trade designation KROMA RO-3097. Obtained from Elementis, East Saint Louis, IL. |
| MINI | Shaped abrasive particles were prepared according to the disclosure of U. S. Pat. No. 8,142,531(Adefris et al.). The shaped abrasive particles were prepared by molding alumina sol gel in right triangle-shaped polypropylene mold cavities. The fired shaped abrasive particles were about 1 mm (side length) x 0.25mm thick. |
| MIN2 | Shaped abrasive particles were prepared according to the disclosure of U. S. Pat. No. 8,142,531(Adefris et al.). The shaped abrasive particles were prepared by molding alumina sol gel in equilateral triangle-shaped olypropylene mold cavities. The fired shaped abrasive particles were about 1 mm (side length) x 0.25mm thick. |
| MIN3 | ANSI grade 40 aluminum oxide, obtained from Washington Mills Electro Minerals Corporation, Niagara Falls, New York. |
| MIN4 | ANSI grade 80 aluminum oxide, obtained from Washington Mills Electro Minerals Corporation, Niagara Falls, New York. |
| MIN5 | Formed abrasive particles were prepared according to the disclosure of U.S. Pat. No. 8,142,531 (Adefris et al.). The formed abrasive particles were prepared by molding alumina sol gel in equilateral triangle-shaped polypropylene mold cavities. The draft angle between the sidewall and bottom of the mold was 98 degrees. After drying and firing, the resulting formed abrasive particles were about 600µm (side length) × 0.25 millimeter (thickness). The formed abrasive particles made as described above are used, for example, in 3M Cubitron II Hookit Clean Sanding abrasive disc 737U, grade 320+, available from 3M Company (St. Paul, Minnesota, USA). |
| MAKE1 | PF1 was catalyzed with 2.5 percent by weight potassium hydroxide. |
| SIZE1 | The size coat composition was prepared by charging a 3 liter (L) plastic container with 431.5 g of PF1, 227.5 g of FIL2, 227.5 g of FIL4 and 17 g of RIO, mechanically mixing and then diluting to a total weight of 1 kilogram with water. |
| SIZE2 | FIL1 (450g) and 15 g of RIO were mechanically stirred into 285 g of PF1. The mixture was diluted to 1 kilogram with water. |
| SATURANT1 | PF1 (900g) and 100g of LATEX were mechanically stirred until mixture was uniformly blended. |
| BACK1 | A backing material (100% polyester 4/1 sateen fabric made from open end spun yarns weight about 300-400 grams per square meter) obtained under "POWERSTRAIT" from Milliken & Company, Sparta, SC., was treated with SATURANT1 bringing the weight to 416 grams per square meter and was subsequently backsized with SIZE2 bringing weight to about 516 grams per square meter. This is called X-weight Polyester backing, which was converted to 4-inch (10cm) width. |
| B7 | Phenolic resin obtained as PREFERE 80 5077A from Arclin, Mississauga, Ontario, Canada |
| GEO | Anti-foam agent, obtained as GEO FM LTX from GEO Specialty Chemicals, Ambler, Pennsylvania |
| U0 | Solvent free aliphatic polycarbonate polyurethane Alberdingk U6150 from ALBERDINGK BOLEY INC Greensboro, NC |
| SIC | silicon carbide, black, grade P1500, obtained from GNP Ceramics LLC, Clarence Center, New York |
| D1 | Ethoxylated nonionic surfactant, obtained as DYNOL 604 from Air Products and Chemicals Inc., Allentown, Pennsylvania |
| COL | Carbon black pigment, obtained as C-SERIES BLACK 7 LCD4115 from Sun Chemical Corporation, Cincinnati, Ohio |
| FIL5 | Silicon Dioxide Cabosil M5 from ET HORN CO, La Mirada California. |
| ANT | Synthetic Paraffin MP22 obtained from Micro powders Inc, Tarrytown, New York |
| AP180 | Fused and fired Aluminum oxide particles of size 180, produced by Triebacher, Austria |

### Example 1

MAKE1 was continuously coated at a weight of 24 grains per 4"x6" (10 x 15 cm) area by means of a notch bar onto BACK1.

MIN1 was coated onto the continuously moving BACK1 by means of an electrostatic coater at a total mineral weight of 60 grains per 4"x6" (10 x 15 cm) area. A second mineral MIN4 was also applied by means of an electrostatic coater at a weight of 20 grains per 4"x6" (10 x 15 cm) area.

Material was converted to lengths of approximately 40 inches long and placed in a batch oven. Oven was operated for 30 minutes at 175 F, 30 minutes at 195 F, and 70 minutes at 210 F.

Material was removed from a batch oven and pass through a roll coater to apply SIZE1 at a coverage rate of 483 grams per square meter with a 75 cm paint roller and resultant product was cured at 90 °C for 60 minutes and then at 102 °C for 8 hours more.

### Example 2

The sample made in Example 1 was repeated, except that MIN2 used in alternative to MIN1.

### Example 3

The sample made in Example 1 was repeated except that MIN3 was used in alternative to MIN1.

### Example 4

### A- Preparation of Laminated Loop Backing

### Laminated Loop Backing Raw Materials

| | |
|---|---|
| NET MESH | Net Mesh GR150 H100 available from SitiP, S.p.A., Cene, Italy. |
| BOSTIK | PE85-60 30610536 Hot melt web 48 inches wide (72 gsm) available from Bostik, Inc., Wauwatosa, Wisconsin. |

The NET MESH was laminated to one layer of 72 grams per square meter of BOSTIK using an iron press for about two seconds contact time, this way creating a continuous film on the loop backing.

### B- Phenolic Resin preparation

The components of the phenolic resins used to prepare the abrasive articles described herein are listed in Table 2.

**Table 2. Components and percentages of Phenolic Resin mix.**

| Ingredients | Wt. % |
|---|---|
| B7 | 55-75 |
| U0 | 1-10 |
| D1 | 0.005-0.02) |
| GEO | 0.0005-0.003 |
| FIL2 | 10-20 |
| SIC | 1-10 |
| COL | 0.1-0.5 |
| FIL5 | 1-5 |
| ANT | 1-10 |

A curable composition was prepared, under high speed dispersion, using a high shear blade between 600 rpm to 900 rpm, until a homogeneous mix was obtained, by blending B7 with U0, then under shear adding D1, GEO, COL, SIC, FIL2, ANT and slowly adding FIL5.

### C- Stencil printing process

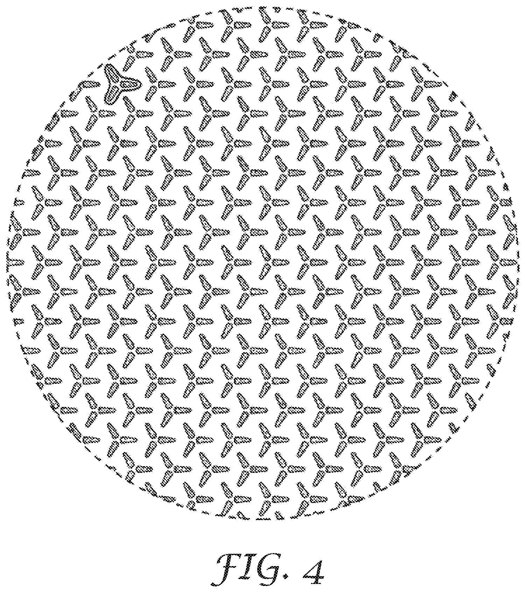

Using a patterned 3 mil polyester stencil (patterned as shown in FIG. 4) placed over the continuous film on the A- Laminated Loop Backing, the curable composition B- Phenolic Resin was stencil printed by bringing the backing and the stencil in contact, applying the curable composition to the side of the stencil opposite the backing, forcing the curable composition through the screen/stencil with a blading mechanism, then separating the stencil and backing leaving a coating of the curable composition on the backing, the amount of curable composition coated was 100 gsm, having a film thickness of 100 microns. Then while the curable composition was still wet, 50 gsm blend of 70% AP180 and 30% MIN5 were electrostatically coated (Spellman SL 150). The entire construction was then thermally pre-cured in a batch oven at 80°C for 30 minutes and final cured in a batch oven at 103°C for four hours. During this final stage the curable composition was cured and the BOSTIK melted, wicking down the threads and screen of the loop backing, reopening a number of the original holes of the backing. In this instance, a minimum 90% of original holes were reopened.

### Comparative Example 1 3M High Productivity Pad 7300 (available from 3M Company, St. Paul, MN)

### Comparative Example 2 3M Black Stripper PAD 7200 (available from 3M Company, St. Paul, MN)

### Comparative Example 3 SCOTCH-BRITE Surface Preparation Pad Plus (available from 3M Company, St. Paul, MN)

### TEST RESULTS

### 1. Schiefer Cut Test

Schiefer cut testing was performed to evaluate the relative abrasiveness of the articles in this invention. The test was performed in a generally similar manner as described in U.S. Patent No. 5,626,512 (Palaikis et al). EXAMPLEs 1-3 were laminated with a layer of hook materials (Aplix 220 hook), then were cut into a circular pad (8.25 cm in diameter). 3M 96 scouring pad (available from 3M Company, St. Paul, MN) was cut into a circular shape with the same size. The hook side of the article was attached to the 3M 96 scouring pad, then the whole assembly was secured to the drive plate of the Schiefer Abrasion Tester (available from Frasier Precision Company of Gaithersburg, Maryland). The workpieces were all approximately 10.16 cm in diameter and about 0.317 cm thick. The initial dry weight of each workpiece was recorded and the workpiece was secured to the lower turntable of the test machine using double sided foam tape. Testing was conducted under a load of 2.26 kg for 2,000 revolutions in total with water applied to the surface of the acrylic disc at a rate of 40-60 drops/minute. The test was stopped every 500 revolutions. The workpiece was dried and weighed. The weight loss of the acrylic disc during the test was given as the result (reported as grams) in Table 3. Example that shows higher weight loss has higher cut rate.

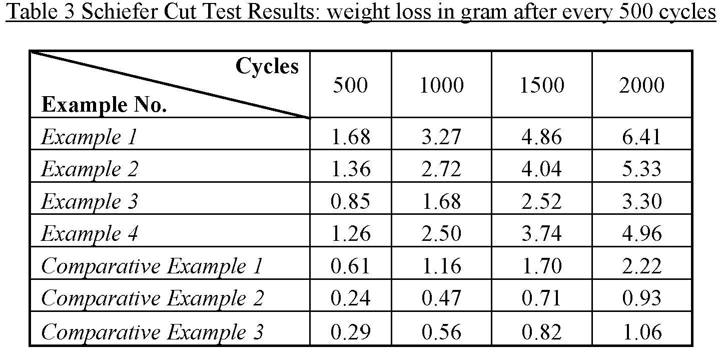

### 2. Floor Finish Removal Test

A vinyl composition tile (VCT) floor test area was first stripped, then coated with 1 layer of Signature floor finish (available from Sealed Air, Charlotte, NC, 28273) at a rate of 2000 sq. ft per gallon, and drew 5 marker lines on each tile after drying, then coated 4 layer of Signature floor finish on top of maker lines and allowed to cure 7 days before testing. Examples 1-4 were laminated with a layer of hook materials (Aplix 220 hook), then were cut into 3"x9" (7.6 x 23 cm) strips and the hook side of 6 strips were attached to the 14"x20" 3M Red Buffer floor pad in 3 rows, and the whole assembly was mounted on a 14"x20" (35.6 x 51 cm) Square Scrub machine (EBG-20/C PIVOT from Square Scrub). The Square Scrub machine was moved back and forth on the tested tile. The number of passes were counted until 95% of the maker lines were removed. Back and forth were counted as 2 passes. Table 4 shows the testing results. Examples that needed less number of passes to remove 4 layers of Signature floor finish are more efficient.

**Table 4 Floor Finish Removal Test Results**

| **Example No.** | **No. of passes to remove 4 layers of floor finish** |
|---|---|
| *Example 1* | 3 |
| *Example 2* | 4 |
| *Example 3* | 10 |
| *Example 4* | 3 |
| *Comparative Example 1* | 16 |
| *Comparative Example 2* | 30 |
| *Comparative Example 3* | 40 |

## Claims

1. A floor finish removal pad assembly (100), comprising:
a compressible backing pad (110) having a first major surface and a second major surface; and
a plurality of discontinuously arranged, non-rigid coated abrasive articles (120a-d) attached to the first major surface of the compressible backing pad or a discontinuously patterned, non-rigid coated abrasive article substantially coextensive with the compressive backing pad and attached to the first major surface of the compressible backing pad, wherein
the coated abrasive articles include equilateral triangle shaped grains or right triangle shaped grains.

2. The floor finish removal pad of claim 1, wherein the plurality of discontinuously arranged, non-rigid coated abrasive articles are removably attached to the first major surface of the compressible backing pad.

3. The floor finish removal pad assembly of claim 1, wherein the coated abrasive articles include aluminum oxide grains.

4. The floor finish removal pad assembly of claim 1, wherein the compressible backing pad is a lofty nonwoven pad.

5. The floor finish removal pad assembly of claim 1, wherein the compressible backing pad is a foam pad.

6. The floor finish removal pad assembly of claim 1, wherein the compressible backing pad includes abrasive grains.

7. The floor finish removal pad assembly of claim 1, wherein the coated abrasive articles include a lubricant.

8. A method of removing floor finish, comprising: contacting a plurality of discontinuously arranged, non-rigid coated abrasive articles (120a-d) or a discontinuously patterned, non-rigid coated abrasive article attached to a major surface of a compressible backing pad (110) with a coated hard floor surface; and optionally repeating the step of contacting; wherein the step of contacting is done in the absence of an effective amount of chemical strippers, wherein the non rigid-coated abrasive articles (120a-d) include equilateral triangle shaped grains or right triangle shaped grains.

9. The method of claim 8, wherein the step of contacting is done also in the absence of water.

10. The method of claim 8 or 9, wherein, prior to the step of contacting, the method includes attaching the compressible backing pad to a scrubber or sander.

11. The method of claim 10, wherein the compressible backing pad is attached to an autoscrubber.

12. The method of claim 10, wherein the compressible backing pad is attached to an orbital sander.

## Patentansprüche

1. Eine Bodendeckschichtentfernungspadanordnung (100), aufweisend:
ein komprimierbares Trägerpad (110), das eine erste Hauptoberfläche und eine zweite Hauptoberfläche hat; und
eine Mehrzahl von diskontinuierlich angeordneten, nicht-starren beschichteten Schleifgegenständen (120a-d), die an der ersten Hauptoberfläche des komprimierbaren Trägerpads befestigt sind, oder einen diskontinuierlich gemusterten, nicht-starren beschichteten Schleifgegenstand, der im Wesentlichen koextensiv mit dem komprimierenden Trägerpad ist und an der ersten Hauptoberfläche des komprimierbaren Trägerpads befestigt ist, wobei
die beschichteten Schleifgegenstände Körner in gleichseitiger Dreiecksform oder Körner in rechtwinkliger Dreiecksform aufweisen.

2. Das Bodendeckschichtentfernungspad nach Anspruch 1, wobei die Mehrzahl von diskontinuierlich angeordneten, nicht-starren beschichteten Schleifgegenständen an der ersten Hauptoberfläche des komprimierbaren Trägerpads lösbar befestigt ist.

3. Die Bodendeckschichtentfernungspadanordnung nach Anspruch 1, wobei die beschichteten Schleifgegenstände Aluminiumoxidkörner aufweisen.

4. Die Bodendeckschichtentfernungspadanordnung nach Anspruch 1, wobei das komprimierbare Trägerpad ein bauschiges Vliespad ist.

5. Die Bodendeckschichtentfernungspadanordnung nach Anspruch 1, wobei das komprimierbare Trägerpad ein Schaumstoffpad ist.

6. Die Bodendeckschichtentfernungspadanordnung nach Anspruch 1, wobei das komprimierbare Trägerpad Schleifkörner aufweist.

7. Die Bodendeckschichtentfernungspadanordnung nach Anspruch 1, wobei die beschichteten Schleifgegenstände ein Schmiermittel aufweisen.

8. Ein Verfahren zum Entfernen einer Bodendeckschicht, aufweisend: Inkontaktbringen einer Mehrzahl von diskontinuierlich angeordneten, nicht-starren beschichteten Schleifgegenständen (120a-d) oder eines diskontinuierlich gemusterten, nicht-starren beschichteten Schleifgegenstands, die an einer Hauptoberfläche eines komprimierbaren Trägerpads (110) befestigt sind, mit einer beschichteten Hartbodenoberfläche; und gegebenenfalls Wiederholen des Schritts des Inkontaktbringens; wobei der Schritt des Inkontaktbringens in der Abwesenheit einer wirksamen Menge an chemischen Abbeizmitteln durchgeführt wird, wobei die nicht-starren beschichteten Schleifgegenstände (120a-d) Körner in gleichseitiger Dreiecksform oder Körner in rechtwinkliger Dreiecksform aufweisen.

9. Das Verfahren nach Anspruch 8, wobei der Schritt des Inkontaktbringens ebenfalls in der Abwesenheit von Wasser durchgeführt wird.

10. Das Verfahren nach Anspruch 8 oder 9, wobei, vor dem Schritt des Inkontaktbringens, das Verfahren ein Befestigen des komprimierbaren Trägerpads an einer Scheuervorrichtung oder Schleifvorrichtung aufweist.

11. Das Verfahren nach Anspruch 10, wobei das komprimierbare Trägerpad an einer Scheuersaugmaschine befestigt ist.

12. Das Verfahren nach Anspruch 10, wobei das komprimierbare Trägerpad an einem Exzenterschleifer befestigt ist.

## Revendications

1. Ensemble tampon de retrait de finition de sol (100), comprenant :
un tampon support compressible (110) ayant une première surface principale et une seconde surface principale ; et
une pluralité d'articles abrasifs revêtus non rigides agencés de manière discontinue (120a-d) fixés à la première surface principale du tampon support compressible ou un article abrasif revêtu non rigide à motif discontinu sensiblement coextensif avec le tampon support compressif et fixé à la première surface principale du tampon support compressible, dans lequel
les articles abrasifs revêtus comportent des grains en forme de triangle équilatéral ou des grains en forme de triangle rectangle.

2. Tampon de retrait de finition de sol selon la revendication 1, dans lequel la pluralité d'articles abrasifs revêtus non rigides agencés de manière discontinue sont fixés de manière amovible à la première surface principale du tampon support compressible.

3. Ensemble tampon de retrait de finition de sol selon la revendication 1, dans lequel les articles abrasifs revêtus comportent des grains d'oxyde d'aluminium.

4. Ensemble tampon de retrait de finition de sol selon la revendication 1, dans lequel le tampon support compressible est un tampon non tissé volumineux.

5. Ensemble tampon de retrait de finition de sol selon la revendication 1, dans lequel le tampon support compressible est un tampon en mousse.

6. Ensemble tampon de retrait de finition de sol selon la revendication 1, dans lequel le tampon support compressible comporte des grains abrasifs.

7. Ensemble tampon de retrait de finition de sol selon la revendication 1, dans lequel les articles abrasifs revêtus comportent un lubrifiant.

8. Procédé de retrait de finition de sol, comprenant : la mise en contact d'une pluralité d'articles abrasifs revêtus non rigides agencés de manière discontinue (120a-d) ou d'un article abrasif revêtu non rigide à motif discontinu, fixés à une surface principale d'un tampon support compressible (110) avec une surface de sol dur revêtue ; et éventuellement la répétition de l'étape de mise en contact ; dans lequel l'étape de mise en contact est effectuée en l'absence d'une quantité efficace de décapants chimiques, dans lequel les articles abrasifs revêtus non rigides (120a-d) comportent des grains en forme de triangle équilatéral ou des grains en forme de triangle rectangle.

9. Procédé selon la revendication 8, dans lequel l'étape de mise en contact se fait également en l'absence d'eau.

10. Procédé selon la revendication 8 ou 9, dans lequel, avant l'étape de mise en contact, le procédé comporte la fixation du tampon support compressible à un dispositif de récurage ou de ponçage.

11. Procédé selon la revendication 10, dans lequel le tampon support compressible est fixé à une autolaveuse.

12. Procédé selon la revendication 10, dans lequel le tampon support compressible est fixé à une ponceuse orbitale.
